(19) **Europäisches Patentamt**

**European Patent Office**

**Office européen des brevets**

(11) **EP 1 035 504 B2**

(12) **NEUE EUROPÄISCHE PATENTSCHRIFT**

(45) Veröffentlichungstag und Bekanntmachung des Hinweises auf die Entscheidung über den Einspruch:
**06.08.2003   Patentblatt 2003/32**

(45) Hinweis auf die Patenterteilung:
**20.12.2000   Patentblatt 2000/51**

(21) Anmeldenummer: **99102523.0**

(22) Anmeldetag: **10.02.1999**

(51) Int Cl.⁷: **G06K 19/077**

(54) **RFID-Transponder mit bedruckbarer Oberfläche**

RFID-Transponder with printable surface

RFID-Transpondeur avec une surface imprimable

(84) Benannte Vertragsstaaten:
**DE FI FR GB**

(43) Veröffentlichungstag der Anmeldung:
**13.09.2000   Patentblatt 2000/37**

(73) Patentinhaber: **X-ident technology GmbH 52355 Düren (DE)**

(72) Erfinder:
 • **Robertz, Bernd Dr.**
   **52428 Jülich (DE)**
 • **Liebler, Ralf Dr.**
   **52327 Kreuzau (DE)**

(74) Vertreter:
**Sternagel, Fleischer, Godemeyer & Partner Patentanwälte**
**Braunsberger Feld 29**
**51429 Bergisch Gladbach (DE)**

(56) Entgegenhaltungen:
| | |
|---|---|
| **EP-A- 0 704 816** | **EP-A- 0 893 271** |
| **WO-A-97/14126** | **AT-B- 403 416** |
| **DE-A- 19 725 276** | **US-A- 3 078 182** |
| **US-A- 4 428 997** | **US-A- 5 294 290** |
| **US-A- 5 726 122** | |

**Beschreibung**

Die Erfindung richtet sich auf direkt bedruckbare und/oder beschreibbare RFID-Transponder, die als Etiketten, Transportgutanhänger, Identifikationskarten, Zutrittsberechtigungskarten verwendbar sind.

Es ist bekannt, Etiketten als fern ablesbare Identifikationsanhänger für Gepäckstücke zu verwenden. Diese weisen beispielsweise ein flexibles Substrat für einen RFID-Transponder auf, mit einer auf dem Substrat angeordneten Antenne und mit einem Transponderschaltungs-Chip sowie Klebeschichten zum Verbinden von Chip und Antenne im Bereich der Antennenanschlußpunkte und der Chipanschlußpunkte. Die Antenne und der Chip können mit einer Schutzfolie abgedeckt sein. Dieser RFID-Transponder ist mittels Klebstoff an dem Etikettenmaterial befestigt. Ein solches Etikett ist in EP-A-595 549 offenbart.

In EP-A-140 230 ist ein mehrschichtiger Datenträger mit integriertem Schaltkreis beschrieben, mit einem IC-Baustein für die Verarbeitung elektrischer Signale, der auf einer flexiblen Trägerfolie mit hoherThermostabilität und hoher Zugfestigkeit, z.B. Polyimidfolie, montiert ist.

Aus DE-A-196 01 358 ist ein Papier bekannt, in das eine integrierte Schaltung, die vorbestimmte Daten enthält, die kontaktlos auslesbar sind, eingebettet ist. Die Einbettung der integrierten Schaltung in das Papier kann bereits bei der Herstellung von Papierbahnen oder durch Zusammenkleben von zwei Papierbögen erfolgen.

In DE-A-196 33 923 ist eine Chipkarte beschrieben, mit mindestens einem Halbleiterbauelement, einer Induktionsspule zum Daten- und Energieaustausch und mindestens einem weiteren passiven Bauelenent, bei der alle passiven Bauelemente aus zweidimensionalen Leiterbahnstrukturen unmittelbar auf dem Kartengrundkörper gebildet sind. Angaben zum Material des Kartengrundkörpers fehlen.

EP-A-742 926 richtet sich auf einen ein- oder mehrschichtigen Datenträger aus Papier und/oder Karton mit einem eingebetteten elektronischen Modul, das zum Austausch von Daten mit einem externen Gerät dient. Die Einbettung des Moduls in den Papierkartenkörper kann durch Einkleben oder Einlaminieren erfolgen.

Aus DE-A-38 07 936 ist ein elektronisches Diebstahlsicherungssystem bekannt, das mit einer Sendefrequenz im GHz-Bereich (ca. 2,5 GHz) arbeitet, um kleine Abmessungen des passiven Sicherungselementes (passiver Transponder) zu ermöglichen. Das passive Sicherungselement ist mit dem Warenetikett zu einer Einheit verbunden.

Bei den bekannten Etiketten oder Karten mit RFID-Transpondern, die eine Trägerfolie mit darauf angeordneter Antenne und Schaltungschip aufweisen, sind die sogenannten Folientransponder zwischen einem Etikettenobermaterial aus Papier oder einer Kunststoffolie und weiteren Schichten einlaminiert, um chip und Antenne gegen Beschädigungen zu schützen. Ähnliche Laminatstrukturen sind auch für Eintrittskarten Fahrkarten, Anhängeetiketten mit RFID-Transpondern bekannt. Diese Laminate sind auf der Vorderseite und gegebenenfalls auch auf der Rückseite mit dafür üblichen Verfahren bedruckbar.

Nachteilig ist, daß zusätzlich zu den Basismaterialien die Trägerfolie des Transponders in das Endprodukt eingebracht werden muß, ohne daß sie für das Endprodukt eine funktionelle Bedeutung hat.

Aus EP-A-704 816 ist ein RFID-Transponder bekannt, bei dem die Antenne und der Schaltungschip auf einem flexiblen dielektrischen Träger angeordnet sind. Als geeignete Träger sind beispielsweise Papier oder Kunststoffolien genannt. Auf der der Antenne und dem Chip gegenüberliegenden Oberfläche des Trägers ist eine mit einer vor Gebrauch abziehbaren Abdeckung versehene Kleberschicht vorhanden, um den Transponder an dem zu identifizierenden Gegenstand zu befestigen.

Aufgabe der Erfindung ist es, Etiketten, Transportgutanhänger, Identifikationskarten, Zutrittsberechtigungskarten und dergleichen, die jeweils einen RFID-Transponder mit Antenne und damit verbundenem Schaltungschip aufweisen, im Aufbau zu vereinfachen, so daß eine kostengünstigere Massenherstellung möglich ist.

Diese Aufgabe wird gelöst durch RFID-Transponder mit einem Träger aus Papier/Karton für mindestens eine darauf ausgebildet Antenne und damit elektrisch verbundenem Schaltungschip die auf einer Oberfläche des Trägers angeordnet sind und auf dieser Oberfläche des Trägers auch eine mit einer Deckschicht abgedeckte Kleberschicht vorhanden ist, dadurch gekennzeichnet ist, daß auf der anderen Oberfläche des Träger zur Ausbildung einer bedruckbaren und/oder beschreibbaren Oberfläche eine bedruckbare Schicht vorhanden ist.

Die Oberfläche des Papierträgers ermöglicht es, darauf ein oder mehrere Antennen und elektronische Bauteile, wie Chips, Kondensatoren mit Massenfertigungsmethoden aufzubringen.

Zur massenweisen Herstellung von Antennen eignen sich insbesondere kontinuierlich arbeitende Methoden, wie z.B. Druckverfahren, bei denen beispielsweise hoch-leitfähige Silberleitpasten aufgedruckt werden. Auch Präge-, Stanzverfahren sowie Vakuumbedampfung, ggf. in Kombination mit galvanischer Verstärkung sind für die massenweise kontinuierliche Antennenfertigung geeignet.

Ebenso können subtraktiv arbeitende Methoden, wie z.B. Ätzprozesse, angewandt werden. Als Antennenmaterial können Aluminium, Aluminiumlegierungen, Kupfer, Kupferlegierungen, Silber, Silberlegierungen, Gold, Goldlegierungen verwendet werden. Die weiteren elektronischen Module und die elektrische Verbindung mit den Antennenwindung(en) erfolgen mit den üblichen Verfahren. Hier hat sich insbesondere das Aufkleben mittels leitfähiger Kleber als vorteilhaft erwiesen.

Die für das Aufbringen der Antennen und weiteren elektronischen Bauteile vorgesehene Oberfläche des Papiers/Kartons sollte bestimmte Anforderungen erfüllen, um die notwendige Güte und Funktionsfähigkeit der Antenne(n) sicherzustellen.

Dämpfung und Güte von Antennen:

Zum Verständnis der Güte eines elektromagnetischen Schwingkreises wird zweckmäßig die Dämpfung als bestimmendes Element beschrieben, da die Güte daraus abgeleitet wird.

Als Dämpfung (attenuation) wird allgemein ein Energieverlust bezeichnet, korrekter die unerwünschte Umwandlung eines Teils der Energie in Wärme. Dies tritt z. B. auf während der Übertragung eines Signals (elektrische Energie) oder bei einer Pendelbewegung (kinetische Energie).

Bei einem elektromagnetischen Schwingkreis treten Energieverluste auf in den Schwingkreiskomponenten Spule, Kondensator und Energieverbraucher (z.B. Chip und evtl. zusätzliche Dämpfungskomponenten wie Abschirmung).

Ein bestimmender Anteil sind Gleichstromisolation (ohmscher Isolationswiderstand) und Hochfrequenzisolation (spezifische frequenzabhängige Verlustfaktoren der Isoliermaterialien) aller Komponenten des Schwingkreises.

Die Dämpfung der Kondensatoren (diskreter Kondensator, Spulen-, Leitungs-, Verbraucherkapazität) ist bestimmt durch Gleichstrom- und Hochfrequenzisolation. Diese trägt meist relativ wenig zum Energieverlust bei im Vergleich zu Spulen und natürlich dem Verbraucher und können deshalb meist in diesen Betrachtungen im ersten Ansatz vernachlässigt werden.

Bei Spulen bestimmen Gleichstromwiderstand (Spulen-, Kontakt-, Leitungsdrahtwiderstand) und Skineffekt (frequenzabhängiger Widerstand) wesentlich die Verluste. Widerstandserhöhung durch hohe Stromdichte kann hier vernachlässigt werden.

Der angeschlossene Energieverbraucher (z. B. Chip, zusätzliche Dämpfungskomponenten wie Abschirmung) ist komplex und hat eine frequenz- und energieabhängige Dämpfung.

Alle dämpfenden Anteile können in einer Schwingkreisschaltung durch (Ersatz-)Widerstandswerte beschrieben werden, die vereinfacht in einem Dämpfungswiderstand $Z_o$ zusammengefaßt werden.

Der Parallelschwingkreis ist bei niedrigen Frequenzen durch die Induktivität der Spule und bei hohen Frequenzen durch die Kapazität des Kondensators sehr niederohmig. Im Bereich der Resonanzfrequenz $f_{res}$ jedoch ist er hochohmig. (Bei der Alternativschaltung eines Serienschwingkreises sind die Widerstandsverhältnisse umgekehrt).

Der Schwingkreis erlaubt damit eine Frequenzselektion im Bereich der Resonanzfrequenz $f_{res}$.

Die Resonanzfrequenz $f_{res}$ des idealen Schwingkreises wird bestimmt durch die Induktivität L und die Kapazität $C$:

$$f_{res} = \frac{1}{2\pi \cdot \sqrt{C \cdot L}}$$

Durch Dämpfung wird die Resonanzfrequenz etwas reduziert.

Wesentlicher ist jedoch, daß die Selektionsschärfe durch den Dämpfungswiderstand $Z_o$ begrenzt wird. Die Dämpfung d bewirkt eine Reduzierung der Resonanzüberhöhung und damit der Schwingkreisselektion.

Die Schwingkreisselektion wird beschrieben durch die Frequenzbandbreite b, bei der die Resonanzüberhöhung auf den Faktor 0,7 zurückgeht:

$$b = f_{res} \, d_{res}$$

Interpretation: Bei niedriger Dämpfung $d_{res}$ ist die Bandbreite b gering und damit die Selektion hoch.

Die Güte $Q_{res}$ wird definiert als Kehrwert der Dämpfung.

$$d_{res} = \frac{1}{Q_{res}}$$

Damit ist die Bandbreite b auch beschreibbar durch die Güte $Q_{res}$:

$$b = \frac{f_{fes}}{Q_{res}}$$

Interpretation: Bei niedriger Güte $Q_{res}$ ist die Bandbreite b groß, die Selektion und damit die Resonanzüberhöhung gering.

Das (der) als Träger für die Antenne(n) geeignete Papier/Karton soll eine ausreichende Leimung aufweisen, um sicherzustellen, daß die zum Ausbilden von passiven Bauteilen, wie Antennen oder Kondensatoren auf die Oberfläche aufgebrachten Materialien nicht zu tief in den Träger eindringen oder wegschlagen.

Der gewünschte Leimungsgrad kann sowohl durch Masseleimung als auch durch Oberflächenleimung oder Kombination von Masse- und Oberflächenleimung bei der Herstellung des Papiers/Kartons eingestellt werden.

Der Leimungsgrad des Trägerpapiers kann mit dem in der Papierindustrie dafür üblichen Verfahren nach Cobb (DIN 53132) bestimmt werden. Es ist jedoch bevorzugt, die Bestimmungsmethode zu modifizieren und anstelle von Wasser Rizinusöl mit einer Viskosität bei 20°C von 900 mPa.s bis 1100 mPa.s zu verwenden. Die Meßzeit beträgt 30 Sekunden.

Rizinus-Cobbtest:

Der Rizinus-Cobbtest wird in Anlehnung an DIN 53132 (Bestimmung der Wasseraufnahme nach Cobb) durchgeführt. Unter Ölaufnahme wird die Menge Rizinusöl in Gramm verstanden, die von 1 m² Papierfläche einseitig während der Einwirkdauer t unter den Anforderungen dieser Norm (Öltemperatur 20°C ±1°C) aufgesaugt wird, wobei das Öl nicht bis zur anderen Seite durchgedrungen sein darf.

Das Absorptionsgerät besteht aus einem Metallzylinder mit lichten Querschnitt von 100±0,2 cm² und einer Höhe von ca. 50 mm. Der Metallzylinder kann derart gegen eine starre Platte gedrückt werden, daß ein dichter Abschluß erreicht wird.

Für die Bestimmung der Cobb-Werte wird der Metallzylinder bis zu einer Höhe von 30 mm mit Rizinusöl gefüllt und ein kreisförmiger Probenkörper mit einem Durchmesser von 130 mm zwischen Metallzylinder und starrer Platte eingelegt. Durch Andrücken der starren Platte wird der Metallzylinder fest geschlossen, so daß kein Öl austreten kann.

Anschließend wird der mit der starren Platte abgedichtete Metallzylinder um 180° um seine Querachse (=Durchmesser) gedreht und gleichzeitig ein Zeitmesser in Gang gesetzt. Bei einer gewüschten Einwirkdauer von 30 Sek. wird der Metall zylinder nach 25 Sek. wieder um 180° in die Ausgangsposition gedreht und das auf dem Papier befindliche Öl durch Herausziehen des Probenkörpers zwischen Metallzylinder und starrer Platte vollständig abgestreift. Nach insgesamt 30 Sek. wird für 2 bis 3 Sek. ein Löschkarton mit einem Flächengewicht von 200 bis 250 g/m² auf die benetzte Seite aufgelegt und die Ablöschrolle über die abgedeckte Probe gerollt. Die Probe wird mit einer Analysenwaage mit einer Fehlergrenze von ±0,001 g gewogen.

Der Cobb-Wert wird wie folgend berechnet:

$$Cobb_{Flüssigkeit} = \frac{m2 - m1}{0,01\ m^2}$$

m1 = Masse der Probe in g vor Versuch

m2 = Masse der Probe nach Versuch Rizinusöl:

Verwendet wird Rizinusöl "Ricini Oleum raffinatum DAB 98", mit Prüfzertifikat nach § 6 Abs.3 Ap-Betriebsordnung.

Viskosität 1006 mPas; Brechnungsindex 1,4797; Jodzahl 85; Säurezahl 0,43; Verseifungszahl 182; unverseifbare Anteile 0,74%; Peroxidzahl 1,56.

Bevorzugt weisen die geeigneten Trägerpapiere mit Rizinusöl bestimmte $Cobb_{30}$-Werte von 3 g bis 10 g auf.

Es können die für die Leimung von Papier/Karton üblichen, bekannten Masse- und/oder Oberflächenleimungsmittel verwendet werden. Besonders bevorzugt sind neutral oder schwach alkalische Leimungsmittel, z.B. natürliche oder synthetische Harze, wie Kolophonium oder modifizierte Kolophoniumharze, Harzseifen; synthetische Polymere, wie Polyvinylalkohol, Acrylatpolymere; Ketendimere, Casein, Stärke, Stärkederivate, Wachse. Oberflächenleimung mit siegelfähigen Leimungsmitteln sind bevorzugt, wenn die Bauteile durch Heißprägeverfahren ausgebildet werden sollen.

Die Oberfläche des Papier/Kartonträgers sollte eine ausreichende Glätte aufweisen. Diese kann durch Satinage des Trägermaterials oder durch Aufbringen einer Beschichtung oder Kombination von beiden erreicht werden.

Vorzugsweise weisen die Trägerpapiere/Kartons auf der Seite, auf der die Bauteile ausgebildet werden sollen, eine Oberflächenglätte, gemessen nach Bekk (ISO 5627) über 30 Sek auf, ganz besonders bevorzugt von 80 bis 2000 Sekunden.

Geeignete Beschichtungen zum Erreichen der gewünschten Oberflächenglätte sind durch Extrusionsverfahren aufgebrachte Schichten aus synthetischen Polymeren wie Polyethylen, Polypropylen.

Es können aber auch Beschichtungen aus filmbildenden Polymeren, Bindemitteln gegebenenfalls mit Pigmenten und üblichen Hilfsstoffen aus wäßrigen Dispersionen zum Ausbilden einer die Oberfläche glättenden Beschichtung aufgebracht werden, die, falls erforderlich, durch Satinage noch weiter geglättet werden können.

Da für die Ausbildung der gewünschten Antennenstruktur auch das Aufnahmevermögen für Flüssigkeit nach dem Cobb-Test von Bedeutung ist, müssen der Oberflächenleimung entsprechende Eigenschaften der Beschichtung erreicht werden.

Im Falle von Beschichtungen mit filmbildenden Bindemitteln und Pigmenten kann dies durch Erhöhen des Bindemittel anteils von den üblichen 5-20 Gew.Tl. pro 100 Gew.Tl. Pigment auf 20 bis 50 Gew.Tl. erfolgen. Werden jedoch handelsübliche gestrichene Papiere als Trägerpapier verwendet, kann durch Aufbringen einer Lackschicht, beispielsweise Nitrocellulose, die Saugfähigkeit der pigmentierten Beschichtung in den gewünschten Bereich eingestellt werden.

Die Flächengewichte von geeigneten Trägerpapieren/Karton können von 30 g/m² bis 1000 g/m² betragen, vorzugsweise von 70 g/m² bis 700 g/m².

In allen Fällen kann die Antenne individuell den Erfordernissen angepaßt werden. Während ein postkartengroßes Klebeetikett eine Antennenstruktur, die nahezu den äußeren Abmessungen entspricht, aufweisen kann, lassen sich in den langen, schmalen Fluggepäckanhängern längliche Antennenstrukturen einbringen. Auf diese Weise lassen sich für lange Lesedistanzen möglichst große Antennenflächen erzeugen, andererseits an Stellen, an denen Antennenstrukturen stören würden, z.B. an Stanzungen oder Perforationen, entsprechende Umgehungen vorsehen.

Zur Ausbildung von flachen, insbesondere rechteckigen RFID-Transpondern ist auf einem Trägerpapier/Karton einseitig eine Antenne mit ein oder mehreren Windungen aus einem elektrisch leitfähigen Material aufgebracht. Die Antenne wird durch übliche Maßnahmen auf dem Trägerpapier ausgebildet. Die Antenne weist Antennenanschlußpunkte auf, die vorzugsweise auf dem Trägerpapier so angeordnet sind, daß sie von der Antennenspule umgrenzt sind. Die Antennenwindung(en) hat/haben eine Dicke von 10 µm bis 50 µm.

Der ebenfalls auf dem Trägerpapier/Karton befestigte Schaltungschip hat erste und zweite elektrische Chipkontaktpunkte vor einem inneren Flächenteil des Chips, und die elektrische Verbindung des Chips mit der Antenne ist vorzugsweise mittels elektrisch leitfähigem Klebstoff hergestellt, der zwischen den Antennenanschlußpunkten und den Chipanschlußpunkten angeordnet ist.

Um die Bedruckbarkeit/Beschreibbarkeit der erfindungsgemäßen RFID-Transponder mit Papier/Kartonträger zu verbessern, ist auf der Oberseite des Trägerpapiers eine bedruckbare, vorzugsweise opake oder semitransparente Schicht vorhanden.

Eine solche bedruckbare Schicht enthält feinteilige Pigmente, beispielsweise anorganische Pigmente oder Füllstoffe, wie Kaolin, Calciumcarbonat, Kieselsäure, Silikate, Aluminiumoxid, Aluminiumhydroxid, Zinkoxid, Bariumsulfat, Talk oder Mischungen derselben. Es können aber auch die für Papierbeschichtungen bekannten organischen Polymerpigmente, gegebenenfalls in Kombination mit anorganischen Pigmenten, für die bedruckbare Schicht verwendet werden.

Geeignete filmbildende Bindemittel zum Ausbilden der Schicht und Befestigen der Pigmente an dem Trägerpapier/Karton sind beispielsweise Polyvinylalkohol, Polyvinylpyrrolidon, Kasein, Stärke, Stärkederivate, Styrol-Maleinsäureanhydrid-Copolymere, aber auch die für Papierbeschichtungen bekannten üblichen Polymerlatices, wie Styrol-Butadiencopolymere, Styrol-Acrylsäurecopolymere, Acryllatices. Es können grundsätzlich auch Mischungen von löslichen Bindemitteln miteinander oder Latices mit löslichen Bindemitteln oder Mischungen von Latices verwendet werden.

Es können auch auf Lösemittel basierende Beschichtungszusammensetzungen, beispielsweise mit Nitrocellulose als Bindemittel zur Ausbildung der bedruckbaren Schicht verwendet werden.

Das Verhältnis von Pigment und Bindemittel wird so gewählt, daß eine ausreichende Haftung der bedruckbaren Schicht an dem Trägerpapier/Karton sichergestellt ist, jedoch die Schicht noch ausreichend Porosität aufweist, um gut bedruckbar zu sein.

In der Regel reichen 5 bis 30 Gew.TI., vorzugsweise bis 20 Gew.TI. Bindemittel pro 100 Gew.TI. Pigment aus, um eine ausreichend feste bedruckbare und/oder beschreibbare Schicht auszubilden.

Die bedruckbare Schicht kann noch übliche Hilfsmittel, wie Dispergiermittel, Entschäumer, Vernetzungsmittel, Haftvermittler, Verdickungsmittel, Farbstoffe, UV-Stabilisatoren enthalten.

Die bedruckbare Schicht weist vorzugsweise ein Auftragsgewicht (trocken) von 5 g/m$^2$ bis 30 g/m$^2$, vorzugsweise 7 g/m$^2$ bis 20 g/m$^2$ auf.

Bei einer Ausführungsform der Erfindung kann zwischen dem Trägerpapier und der bedruckbaren Schicht noch eine Zwischenschicht angeordnet sein, die ebenfalls teilchenförmige Pigmente/Füllstoffe und Bindemittel enthält. Die Zwischenschicht erhöht die Opazität der Gesamtschicht auf dieser Seite des Trägerpapiers und kann auch isolierende Wirkung gegenüber Wärme oder Sperreigenschaften für migrierende Bestandteile haben. Grundsätzlich können für die Zwischenschicht gleiche filmbildende Bindemittel und Pigmente für die bedruckbare Schicht verwendet werden. Die Zwischenschicht hat vorzugsweise ein Auftragsgewicht (trocken) von 1 g/m$^2$ bis 10 g/m$^2$. Um die Haftung der Zwischenschicht auf dem Trägerpapier/Karton zu verbessern, kann die Zwischenschicht auch ein Haftvermittler neben den üblichen Hilfs- und Zusatzstoffen enthalten, oder das/der Trägerpapier/Karton selbst kann eine haftvermittelnde Oberflächenausrüstung aufweisen.

Bei einer Ausführungsform der Erfindung ist die bedruckbare Schicht als wärmeempfindliche Aufzeichnungsschicht ausgebildet. Bei dieser Ausführungsform enthält die bedruckbare Schicht zusätzlich noch Farbstoffvorläuferverbindung(en), die bei Einwirkung von Wärme mit einer geeigneten sauren Verbindung als Reaktionspartner eine Farbe ausbildet (ausbilden) und ein oder mehrere schmelzbare Verbindungen, wie Wachse und übliche Hilfsstoffe. Die schmelzbaren Verbindungen sollen bei Wärmeeinwirkung den Kontakt der Farbe bildenden Reaktionspartner unterstützen.

Bei einer anderen Ausführungsform der Erfindung ist die bedruckbare Schicht als tintenaufnehmende Aufzeichnungsschicht für das Bedrucken mittels Tintenspritzverfahren ausgebildet. Bei dieser Ausführungsform kann die bedruckbare Schicht neben Pigment(en) und Bindemittel(n) vorzugsweise noch ein oder mehrere kationische Verbindungen zur Fixierung der Farbstoffe der wäßrigen/alkoholischen Tinten enthalten. Beispielsweise kationische Acrylate, Acrylamide, Polydiallyldimethylamin-Chlorid, Polyallylamine, Polydiallylamine, Polyimide, quaternäre Ammoniumverbindungen und in derartigen Aufzeichnungsschichten übliche weitere Hilfsstoffe.

Die bedruckbare Schicht ist aufgrund der Anwesenheit von feinteiligen Pigmenten und Bindemittel(n) in der Regel auch durch andere, bei unmittelbarem Bedarf (on demand) ausführbare Druckverfahren, wie Thermotransferdruck, Laserdruck, Magnetographie, Dot-Matrix bedruckbar. Die bedruckbare Schicht ist auch mittels Flexo-, Offset-, Tief-, und Siebdruckverfahren bedruckbar.

Der besondere Vorteil der erfindungsgemäßen direkt bedruckbaren RFID-Transponder besteht darin, daß sie mit kommerziell eingeführten Druckern bei Bedarf unmittelbar bedruckt werden können, um auf der Oberfläche optisch lesbare Informationen auszubilden, die dem gewünschten Anwendungszweck als Etikett, Anhänger, Zutrittsberechtigungskarte, Identifikationskarte entsprechen. Parallel können die gleichen Informationen und/oder zusätzliche Informationen im Schaltungschip in wieder abrufbarer Form gespeichert werden.

Auf der der bedruckbaren Oberseite gegenüberliegenden Oberfläche weist das Trägerpapier eine Kleberschicht auf. Die Kleberschicht kann ein Flächengewicht von 3 g/m$^2$ bis 30 g/m$^2$, vorzugsweise 5 g/m$^2$ bis 15 g/m$^2$ haben.

Die Kleberschicht kann aus handelsüblichen Heißschmelzklebern oder üblichen Kaschierklebern ausgebildet sein, insbesondere wenn die Deckschicht dauerhaft an dem Trägerpapier/Karton befestigt werden soll. Bei dieser Ausführungsform der Erfindung wird als Deckschicht Papier oder Karton oder eine Kunststoffolie verwendet, um die bedruckbaren RFID-Transponder direkt als Identifikationskarten, Zutrittsberechtigungskarten oder Anhänger verwenden zu können. Das Flächengewicht des Papiers/Kartons für die Deckschicht wird entsprechend der für den Verwendungszweck gewünschten Steifigkeit der Karte ausgewählt. Es kann von 50 g/m2 bis 250 g/m$^2$, vorzugsweise 70 g/m$^2$ bis 120 g/m$^2$ betragen.

Bei einer anderen Ausführungsform der Erfindung wird ein selbsthaftender Klebstoff zur Ausbildung der Kleberschicht verwendet.

Geeignete Haftkleber zur Ausbildung einer Haftkleberschicht sind beispielsweise haftklebende wäßrige Dispersionen auf Basis Acrylsäure, Acrylat (ester mit $C_4$ bis $C_8$-Alkoholen) und/oder mit Acrylat (ester mit $C_4$ bis $C_8$-Alkoholen) und deren Copolymere mit Vinylacetat, Acrylnitril, Diacetonacrylamid und/oder quervernetzte Comonomere (z.B. Divinylbenzol oder Ethylendimethacrylat mit und ohne modifizierende Harzdispersionen (Kohlenwasserstoffhärze, Alkylphenolharze, Terpenphenolharze, Beta-Pinenharze, Kolophoniumharze, Methylstyrol-Vinyltoluolharze), Acrylathaftkleber, gelöst in organischen Lösemitteln mit z.B. Kolophoniumtriglycerid- oder hydrierten Kolophoniumharzen als klebrigmachende Komponente, durch Copolymerisation mit bifunktionellen Monomeren, wie Divinylbenzol oder Ethylendimethacrylat oder Copolymerisation mit UV-Fotoinitiatoren (z.B. Benzophenongruppen) derivatisierte Acrylate, strahlenvernetzbare Haftschmelzkleber auf Acrylatbasis, Haftschmelzkleber auf Basis Isobutylen-Isopren, Isobutylen-Butadien oder Ethylen-Butadien oder Blockcopolymeren mit Styrol (SIS-SB-, SBS- und SE/BS Copolymere) unter Zusatz klebrigmachender Harze, z.B. aliphatische Olefinharze, Kolophonium- oder Terpen-Phenolharze oder Polyaromaten, in Benzin gelöste Haftkleber auf Naturkautschukbasis mit Cummaron-Inden-, Kolophonium- oder Kohlenwasserstoffharzen (z.B. Polyterpene oder Poly-Beta-Pinen) als Klebrigmacher.

Die Haftkleberschicht wird mit einer wieder ablösbaren Deckschicht abgedeckt, um die bedruckbaren RFID-Transponder direkt als selbsthaftende Etiketten zum Kennzeichnen von Transportgut, Textilien oder Behältern nach dem Entfernen der Deckschicht verwenden zu können.

Derartige ablösbare Deckschichten zum Schutz der Haftkleberschicht bis zur endgültigen Verwendung, können sogenannte Trennpapiere sein, das sind Papiere, die mindestens eine so ausgerüstete Oberfläche aufweisen, so daß bei Kontakt mit dem Haftkleber eine Verbindung ausgebildet wird, die jedoch ohne Beeinträchtigung der Klebwirkung der Haftkleberschicht wieder lösbar ist.

Geeignete Trennpapiere sind solche mit einer Oberflächenschicht auf der Vorderseite, die als Trennmittel enthalten kann: Polymere auf der Basis von Celluloseacetat, (Meth)acrylaten, Acrylnitril, Vinylchlorid, Vinylethern oder deren Copolymeren mit z.B. Maleinsäureanhydrid oder modifiziert mit Aldehyd- oder Iminharzen; Wachse auf der Basis von Polyethylen- oder Polyamiden bzw. deren Mischungen mit Polymeren auf der Basis von Nitrocellulose, Polystyrol oder Vinylchlorid-Vinylacetatcopolymeren; Polyvinylestern mit langkettigen Alkoholen; Chromstearaten und darauf basierenden Derivaten; vernetzten Polyorganosiloxanen, gegebenenfalls in Mischung mit Vinylethern und/oder Maleinsäureanhydridpolymeren.

Siliconhaltige Trennschichten werden aus Lösungen in organischen Lösemitteln oder aus wäßriger Emulsion oder als flüssige Polyorganosiloxane auf ein geeignetes Trägermaterial aufgebracht und anschließend vernetzt. Die Vernetzung kann durch katalysierte Kondensation, durch Additionsreaktion, wie Hydrosilylierung oder mittels UV- oder ESH-Strahlen erfolgen.

Die bedruckbare Schicht, gegebenenfalls die Zwischenschicht und die Kleberschicht, können auf das Trägerpapier mit üblichen dafür bekannten Verfahren aufgebracht werden. Im Falle von Haftkleberschichten, insbesondere dann, wenn diese aus organischen Lösemitteln aufgebracht werden sollen, ist es bevorzugt, Haftkleberschicht auf der mit Trennwirkung (Abhäsiveigenschaft) versehenen Deckschicht auszubilden und dann das Trägerpapier mit den ausgebildeten RFID-Transpondern in Kontakt mit der Haftkleberschicht zu bringen.

Bei einer Ausführungsform der Erfindung wird eine endlose Papierbahn als Träger für die Ausbildung der RFID-Transponder verwendet. Auf der Bahn werden in Bahnlaufrichtung eine Vielzahl von RFID-Transpondern mit jeweils Antenne und Chip ausgebildet. Es ist auch möglich, eine breitere Papierbahn zu verwenden und in Bahnlaufrichtung parallel zueinander und in geringem Abstand voneinander Reihen mit einer Vielzahl von RFID-Transpondern zu versehen.

Kleberschicht und Deckschicht werden bei diesen Ausführungsformen vorzugsweise durchgehend auf einer der Oberflächen der Papier/Kartonbahn befestigt. Bevorzugt werden die RFID-Transponder in Bahnlaufrichtung in Abstand voneinander ausgebildet.

Die bedruckbare Schicht auf der gegenüberliegenden Oberfläche des Trägerpapieres kann ebenfalls durchgehend ausgebildet sein. Es ist aber auch möglich, die bedruckbare Schicht jeweils nur im Bereich der RFID-Transponder aufzubringen und die Teile der Bahn zwischen den in Bahnlaufrichtung in Abstand voneinander angeordneten RFID-Transpondern und gegebenenfalls vorhandenen Reihen von RFID-Transpondern frei von der bedruckbaren Schicht zu belassen.

Diese, jeweils zwischen den RFID-Transpondern unterbrochene Ausbildung der bedruckbaren Schicht hat den Vorteil, daß beim Bedrucken der Schicht Sensoren den Beginn und das Ende des jeweiligen RFID-Transponders in der Bahn erfassen und das Bedrucken der RFID-Transponder passergenau steuern können.

Bei einer Ausführungsform eines endlosen RFID-Transponderbandes ist es bevorzugt, zwischen den RFID-Transpondern quer zur Bahnlaufrichtung mindestens eine vorbereitete Trennlinie als Solltrennstelle auszubilden, um das Abtrennen von unbedruckten oder bedruckten RFID-Transpondern vom Band zu erleichtern.

Derartige Solltrennstellen zwischen den bedruckbaren RFID-Transpondern des Bandes können unterschiedlich ausgebildet sein. Beispielsweise können zwischen benachbarten RFID-Transpondern quer zur Bahnlaufrichtung Perforierungen in der Bahn vorhanden sein, die die Solltrennstellen sichtbar machen und das Abtrennen von Einzeleinheiten erleichtern. Wie bereits beschrieben, sind vorzugsweise die einzelnen RFID-Transponder auf dem Trägerpapier nicht unmittelbar aneinandergrenzend ausgebildet, sondern vereinzelt, so daß benachbarte RFID-Transponder auf dem Trägerpapier in Bahnlaufrichtung einen Abstand voneinander aufweisen. Um das Durchtrennen des Trägerpapiers an solchen Solltrennstellen zu unterstützen, kann die Deckschicht zusätzlich perforiert sein und/oder Lochungen aufweisen. Eine solche Ausbildung von Solltrennstellen ist besonders bevorzugt, wenn das Papierband Angreifstellen für Bandförderelemente aufweisen und/oder wenn das Papierband zum Stapeln mit Zick-Zack-Faltung konfektioniert werden soll. Derartige Perforierungen haben aber auch Vorteile, wenn das Papierband zu Rollen konfektioniert werden soll.

Bei den Ausführungsformen der bedruckbaren RFID-Transponder in Bandform mit einer Reihe einer Vielzahl von RFID-Transpondern kann die Bandbreite von 45 mm bis 100 mm betragen. Bei schmaleren Bahnen sind die rechteckigen RFID-Transponder in Längsrichtung des Bandes ausgebildet. Breitere Bahnen sind dann erforderlich, wenn die rechteckigen RFID-Transponder quer zur Bahnlaufrichtung ausgebildet sind.

Die Bandbreite wird den kommerziellen Druckern, die das Bedrucken von Etiketten oder Zutrittsberechtigungskarten bei Bedarf unmittelbar erledigen, angepaßt.

Die Erfindung wird durch die nachfolgenden Beispiele noch besser verständlich.

Beispiel 1

Ein einseitig gestrichenes Kunstdruckpapier mit einem Flächengewicht von 100 g/m$^2$ wird auf der Rückseite durch Extrusion mit Polyethylen beschichtet. Auf diese Seite werden Antennenstrukturen mittels Heißprägeverfahren abgebildet. Sie werden um ein vorgesehenes Stanzloch herumgeführt. Die Leiterbahnbreite beträgt 360 µm, die Dicke 41 µm.

Die Antennen erfüllen die für das System notwendigen Güteanforderungen.

Nach dem Aufbringen der Chips wird ein 100 g/m$^2$-Papier mittels Kaschierkleber gegenkaschiert. Die Bahn kann zu RFID-Anhängeretiketten verarbeitet werden.

Beispiel 2

Auf das in Beispiel 1 verwendete, mit Polyethylen beschichtete Papier, bei dem die Polyolefinschicht 36 µm dick ist, werden im Längsabstand von 50 cm 20 cm breite Cu-Streifen laminiert. Nach dem Aufbringen eines Photoresists, der Belichtung usw. werden die Antennenstrukturen im Längsabstand von ca. 50 cm und im seitlichen Abstand von ca. 60 mm geätzt.

Nach dem Aufbringen der Chips wird die Bahn vollflächig gegen ein 70 g/m2-Thermopapier kaschiert, die andere Seite mit einem kleberbeschichteten Silikonpapier abgedeckt.

Die Bahn wird zu Streifen von 50 cm Länge und 54 mm Breite in Form von Rollen ä 200 Stück verarbeitet und kann für einreißfeste Fluggepäckanhänger verwendet werden.

**Patentansprüche**

1. RFID-Transponder mit einem Träger aus Papier/ Karton für mindestens eine darauf ausgebildete Antenne und damit elektrisch verbundenem Schaltungschip die auf einer Oberfläche des Trägers angeordnet sind und auf dieser Oberfläche des Trägers auch eine mit einer Deckschicht abgedeckte Kleberschicht vorhanden ist, **dadurch gekennzeichnet, daß** auf der anderen Oberfläche des Trägers zur Ausbildung einer bedruckbaren und/oder beschreibbaren Oberfläche eine bedruckbare Schicht vorhanden ist.

2. RFID-Transponder nach Anspruch 1, **dadurch gekennzeichnet, daß** ein selbsthaftender Kleber die Kleberschicht bildet und die Deckschicht ein Trennpapier ist, dessen mindestens eine Oberfläche mit einem Trennmittel ausgerüstet ist, so daß die Deckschicht an der selbsthaftenden Kleberschicht wieder ablösbar ist.

3. RFID-Transponder nach Anspruch 1, **dadurch ge-**

**kennzeichnet, daß** ein Heißkleber, Kaschierkleber die Kleberschicht bildet und die Deckschicht ein mit der Kleberschicht nicht ablösbar verbundenes Papier/Karton oder Kunststoffolie ist.

4. RFID-Transponder nach einem der Ansprüche 1-3, **dadurch gekennzeichnet, daß** das Trägerpapier oder der Trägerkarton auf der für das Ausbilden der Antenne vorgesehenen Oberfläche eine Oberflächenglätte, gemessen nach Bekk von 30 bis 2000 Sek. aufweist.

5. RFID-Transponder nach einem der Ansprüche 1-4, **dadurch gekennzeichnet, daß** das Trägerpapier oder der Trägerkarton auf der für das Ausbilden der Antenne vorgesehenen Oberfläche ein Aufnahmevermögen für Rizinusöl, bestimmt nach einem modifizierten Cobb-Verfahren von 3 bis 10 g bei 30 Sek. Meßzeit aufweist.

6. RFID-Transponder nach einem der Ansprüche 1-5, **dadurch gekennzeichnet, daß** die bedruckbare Schicht als wärmeempfindliche Aufzeichnungsschicht ausgebildet ist, die bei Einwirkung von Wärme ein oder mehrere sichtbare Farben entwickelt.

7. RFID-Transponder nach einem der Ansprüche 1-5, **dadurch gekennzeichnet, daß** die bedruckbare Schicht als tintenaufnehmende Schicht für das Spritzverfahren ausgebildet ist.

8. RFID-Transponder nach einem der Ansprüche 1 bis 5, **dadurch gekennzeichnet, daß** die bedruckbare Schicht mittels Transferdruck, Laserdruck, Offsetdruck, Flexodruck, Tiefdruck, Siebdruck bedruckbar ist.

9. RFID-Transponder nach einem der Ansprüche 1 bis 8, **dadurch gekennzeichnet, daß** der Träger ein endloses Papier/Kartonband ist, auf dem in Bandlaufrichtung in Abstand voneinander eine Vielzahl von RFID-Transpondern mit jeweils Antenne und Chip ausgebildet sind.

10. RFID-Transponder nach Anspruch 9, **dadurch gekennzeichnet, daß** zwischen den RFID-Transpondern quer zur Bandlaufrichtung mindestens eine vorbereitete Trennlinie als Solltrennstelle ausgebildet ist.

11. Verwendung von RFID-Transpondern nach einem der Ansprüche 1, 2, 4 bis 10 als selbsthaftende Etiketten zum Kennzeichnen von Transportgut, Textilien, Behältern.

12. Verwendung von RFID-Transpondern nach einem der Ansprüche 1, 3, 4 bis 10 als Identifikationskarten, Zutrittsberechtigungskarten.

## Claims

1. An RFID transponder with a carrier made of paper/cardboard for at least one antenna formed thereon and a circuit chip electrically connected thereto, which are arranged on a surface of the carrier and on said surface of the carrier a layer of adhesive is present which is covered by a covering layer, **characterised in that** an imprintable layer is present on the other surface of the carrier for the purpose of forming an imprintable and/or inscribable surface.

2. An RFID transponder according to Claim 1, **characterised in that** a contact adhesive forms the layer of adhesive and the covering layer is a release paper, the at least one surface of which is provided with a release agent, so that the covering layer on the contact adhesive layer is detachable.

3. RFID transponder according to Claim 1, **characterised in that** a hot-setting adhesive, a laminating adhesive forms the layer of adhesive and the covering layer is a paper/cardboard or plastic film which is connected to the layer of adhesive in non-detachable manner.

4. RFID transponder according to one of Claims 1 to 3, **characterised in that** the carrier paper or the carrier cardboard on the surface which is provided for the formation of the antenna exhibits a surface smoothness, measured according to Bekk, from 30 to 1,000 seconds.

5. RFID transponder according to one of Claims 1 to 4, **characterised in that** the carrier paper or the carrier cardboard on the surface which is provided for the formation of the antenna exhibits an absorptive power in respect of castor oil, determined in accordance with a modified Cobb process, from 3 to 10 g with a measuring-time of 30 seconds.

6. RFID transponder according to one of Claims 1 to 5, **characterised in that** the imprintable layer takes the form of a heat-sensitive recording layer which develops one or more visible colours in the course of the influence of heat.

7. RFID transponder according to one of Claims 1 to 5, **characterised in that** the imprintable layer takes the form of an ink-receptive layer for the ink-jet process.

8. RFID transponder according to one of Claims 1 to 5, **characterised in that** the imprintable layer is capable of being imprinted by means of transfer printing, laser printing, offset printing, flexographic printing, gravure printing, screen printing.

**9.** RFID transponder according to one of Claims 1 to 8, **characterised in that** the carrier is an endless paper/cardboard strip, on which a plurality of RFID transponders with, in each case, antenna and chip, are formed in the direction of travel of the strip, spaced from one another.

**10.** RFID transponder according to Claim 9, **characterised in that** at least one prepared dividing line is formed as a nominal point of separation between the RFID transponders at right angles to the direction of travel of the strip.

**11.** Use of RFID transponders according to one of Claims 1, 2, 4 to 10 as self-adhesive labels for the labelling of transported goods, textiles, containers.

**12.** Use of RFID transponders according to one of Claims 1, 3, 4 to 10 as identification cards, access-authorisation cards.

## Revendications

**1.** Transpondeur RFID qui comporte un support en papier/carton pour au moins une antenne formée sur celui-ci et une puce de circuit reliée électriquement à cette dernière, lesquelles sont agencées sur une surface du support, une couche adhésive recouverte d'une couche de couverture étant également présente sur ladite surface du support, **caractérisé en ce qu'**une couche imprimable est prévue sur l'autre surface du support pour former une surface imprimable et/ou sur laquelle on peut écrire.

**2.** Transpondeur RFID selon la revendication 1, **caractérisé en ce qu'**un adhésif auto-collant forme la couche adhésive, et **en ce que** la couche de couverture est un papier de séparation dont au moins une surface est munie d'un moyen de séparation de telle sorte que la couche de couverture peut être de nouveau enlevée de la couche auto-adhésive.

**3.** Transpondeur RFID selon la revendication 1, **caractérisé en ce qu'**un adhésif à chaud, adhésif contrecollé, forme la couche adhésive, et **en ce que** la couche de couverture est une feuille de papier et/ou de carton ou de plastique reliée à la couche adhésive de manière à ne pas pouvoir être retirée.

**4.** Transpondeur RFID selon l'une des revendications 1 à 3, **caractérisé en ce que** le papier de support ou le carton de support présente sur sa surface prévue pour la conception de l'antenne un lissé de surface mesuré selon Bekk de 30 à 2 000 secondes.

**5.** Transpondeur RFID selon l'une des revendications 1 à 4, **caractérisé en ce que** le papier de support ou le carton de support présente sur sa surface prévue pour la conception de l'antenne un pouvoir absorbant pour de l'huile de ricin, déterminé selon une méthode de Cobb modifiée, de 3 à 10 g pour un temps de mesure de 30 secondes.

**6.** Transpondeur RFID selon l'une des revendications 1 à 5, **caractérisé en ce que** la couche imprimable est conçue comme une couche d'enregistrement qui est sensible à la chaleur et qui développe donc une ou plusieurs couleurs visibles sous l'action de la chaleur.

**7.** Transpondeur RFID selon l'une des revendications 1 à 5, **caractérisé en ce que** la couche imprimable est conçue comme une couche absorbant de l'encre pour le procédé de jet d'encre.

**8.** Transpondeur RFID selon l'une des revendications 1 à 5, **caractérisé en ce que** la couche imprimable est imprimable au moyen d'une impression par transfert thermique, d'une impression par laser, d'une impression offset, d'une impression flexographique, d'une impression en creux, d'une sérigraphie.

**9.** Transpondeur RFID selon l'une des revendications 1 à 8, **caractérisé en ce que** le support est une bande de papier et/ou de carton sans fin sur laquelle plusieurs transpondeurs RFID avec à chaque fois antenne et puce sont conçus à une certaine distance les uns des autres dans la direction d'avance de la bande.

**10.** Transpondeur RFID selon la revendication 9, **caractérisé en ce qu'**une ligne de séparation préparée comme endroit de séparation de consigne est conçue entre les transpondeurs RFID transversalement par rapport à la direction d'avance de la bande.

**11.** Utilisation de transpondeurs RFID selon l'une des revendications 1, 2, 4 à 10, comme étiquettes auto-adhésives pour l'identification de marchandises, de textiles, de récipients.

**12.** Utilisation de transpondeurs RFID selon l'une des revendications 1, 3, 4 à 10 comme cartes d'identification, cartes d'autorisation d'accès.